# EUROPÄISCHE PATENTSCHRIFT

(11) **EP 3 753 406 B1**
(45) Veröffentlichungstag und Bekanntmachung des Hinweises auf die Patenterteilung: **12.07.2023**
(21) Anmeldenummer: 20401028.4
(22) Anmeldetag: 19.05.2020
(51) Int. Cl.: A01M 7/00

(54) **VERTEILERGESTÄNGE**
DISTRIBUTION RODS
TIGE DE DISTRIBUTEUR

(30) Priorität: 23.05.2019 DE 102019113728
(43) Veröffentlichungstag der Anmeldung: 23.12.2020
(73) Patentinhaber: Amazonen-Werke H. Dreyer SE & Co. KG, 49205 Hasbergen (DE)
(72) Erfinder: Kowollik, Daniel, 47443 Moers (DE)

(56) Entgegenhaltungen:
- EP-A1- 0 464 291
- EP-A1- 1 481 586
- EP-A1- 3 278 663
- EP-A1- 3 326 462
- WO-A1-2013/092272
- DE-A1-102016 122 854
- US-A1- 2017 000 103

## Beschreibung

Die Erfindung betrifft ein Verteilergestänge gemäß dem Oberbegriff des Patentanspruches 1.

In einer Vielzahl von Anwendungsfällen, insbesondere in der Landwirtschaft, werden Feldspritzen zum Ausbringen von Pflanzenschutzmitteln auf einer landwirtschaftlichen Fläche eingesetzt. Um eine möglichst große Arbeitsbreite beim Ausbringen mittels der Feldspritzen zu erlangen, weisen diese üblicherweise Verteilergestänge auf, die im Bedarfsfall eine Breite von etwa 40 m oder mehr, quer zu einer Arbeitsrichtung, mit Pflanzenschutzmittel bestreichen können. Das Gestänge wird hierbei in einer Arbeitsstellung betrieben. Neben dem Einsatz auf landwirtschaftlichen Flächen zum Ausbringen des Pflanzenschutzmittels ist jedoch der Transport, in einer sogenannten Transportstellung, der Feldspritze im öffentlichen Straßenverkehr notwendig. Um hierbei eine maximale Breite der Feldspritze samt Verteilergestänge von 3 m nicht zu überschreiten, sind gattungsgemäße Gestänge überwiegend klappbar ausgeführt.

Ein derartiges Verteilergestänge ist beispielsweise in der EP 3 278 663 B1 oder der EP 1 481 586 A1 beschrieben. Ausgehend von einem Mittelteil, weist das Gestänge hierbei mehrere zu jeder Seite, über Gelenke schwenkbar miteinander verbundene Gestängeabschnitte auf. In einer zusammengefalteten Transportstellung sind die einzelnen Gestängeabschnitte einer Seite des Verteilergestänges parallel zueinander einklappbar. Im eingeklappten Zustand weisen die jeweiligen Gestängeabschnitte des Verteilergestänges einen zick-zack-förmigen Verlauf auf. Im Gegensatz hierzu erstreckt sich das Gestänge in einer ausgeklappten Arbeitsstellung quer zur Arbeitsrichtung der Feldspritze.

Die einzelnen Gestängeabschnitte umfassen hierbei neben zwei durchgehenden oberen Außenprofilen einen unteren Träger. Die oberen Außenprofile sind über mehrere Diagonalelemente, die zwischen den Außenprofilen und dem Träger angeordnet sind, mit dem unteren Träger verbunden. Zwei Enden der Diagonalelemente treffen hierbei in einem gemeinsamen Knotenpunkt zusammen. Der Knotenpunkt ist an einer Querstrebe, die quer zu den Diagonalelementen ausgerichtet ist, gekoppelt. Die Querstrebe ist außerdem zwischen den oberen Außenprofilen angeordnet.

Der untere Träger dient üblicherweise zur Aufnahme der eigentlichen Verteileinrichtungen, insbesondere von Spritzdüsen, über die das Pflanzenschutzmittel auf dem landwirtschaftlichen Boden verteilt wird.

Die Verteilungsqualität des auszubringenden Pflanzenschutzmittels auf der landwirtschaftlichen Fläche wird unter anderem von dem Schwingungsverhalten des Verteilergestänges beeinflusst. Schwingungen, insbesondere bodenparallele Schwingungen, können beispielsweise durch äußere Einflüsse wie Fahrbewegungen, Unebenheiten oder Windeinflüsse am Gestänge entstehen. Hierdurch kann es während des Ausbringens dazu kommen, dass der Abstand zwischen den Verteileinrichtungen und dem Boden schwankt, wodurch es zu lokalen Über- und Unterversorgungen des landwirtschaftlichen Bodens kommen kann.

Zur Minimierung der Ausbringfehler resultierend aus dem Schwingverhalten werden beispielsweise ebenfalls aus der EP 3 278 663 B1 bereits bekannte L-profilförmig ausgebildete Gestängequerschnitte verwendet. Um das Gewicht des Gestänges hierbei möglichst gering zu halten bzw. zu reduzieren, werden die einzelnen Gestängeabschnitte überwiegend in einer Leichtbauweise, vorzugsweise als Gitterträger gefertigt. Diese Bauweise bedingt zwar auf der einen Seite eine höhere Steifigkeit gegenüber bodenparallelen Schwingungen, auf der anderen Seite verringert sich jedoch gleichzeitig die Standfestigkeit gegenüber Belastungen einzelner Komponenten und/oder Verbindungen des Gestänges. Unter diesen Belastungen können beispielsweise an den Gestängeabschnitten angreifende Torsionsmomente verstanden werden, welche durch Verschwenken der einzelnen Gestängeabschnitte des Verteilergestänges hervorgerufen werden.

Die der Erfindung zugrunde liegende Aufgabe besteht somit darin, ein Verteilergestänge mit gesteigerter Betriebssicherheit zu schaffen.

Diese Aufgabe wird erfindungsgemäß durch die kennzeichnenden Merkmale des Anspruchs 1 gelöst.

Die Erfindung macht sich die Erkenntnis zunutze, dass das Widerstandsmoment, insbesondere Torsionswiderstandsmoment, eines Gestänges, unter Einbringung zusätzlicher Versteifungselemente mit speziellen Grund- und/oder Querschnittsformen an lokalen Schwachpunkten der als Gitterträger ausgebildeten Gestängeabschnitte erheblich gesteigert werden kann. Die Gestängeabschnitte umfassen hierbei jeweils zumindest ein, auf einer dem unteren Träger zugewandten Seite der Außenprofile und an der Querstrebe angrenzend angeordnetes, vorzugsweise als scheibenförmig ausgebildetes, Versteifungselement. Das Versteifungselement ist hierbei dazu eingerichtet, Lastspitzen und damit resultierende hohe Materialspannungen an den Komponenten, die den Gitterträger bilden, insbesondere im Bereich der Verbindungen zwischen den Diagonalelementen und den oberen Außenprofilen, abzufangen. Die Belastbarkeit des Gestänges ist somit durch die Geometrie und/oder das Material des Versteifungselementes beeinflussbar. Die Befestigung des Versteifungselementes an den Außenprofilen kann vorzugsweise stoffschlüssig, beispielsweise als eine Schweiß-, Löt- oder Klebeverbindung ausgeführt sein. Alternativ oder zusätzlich sind auch kraft- und/oder formschlüssige Verbindungen beispielsweise mittels Schrauben, Nieten und dergleichen denkbar.

Des Weiteren ist durch eine scheibenförmige Ausführungsform ein Versteifungselement mit besonders günstiger Massenverteilung und geringem Gewicht geschaffen. Dadurch ist das Gestänge mit erhöhter Stabilität bei nahezu unbeeinflusstem Gesamtgewicht erreicht. Darüber hinaus bietet das scheibenförmig ausgebildete Versteifungselement den Vorteil, dass dieses als besonders kosten günstiges Blechteil, vorzugsweise mittels eines Blechumformverfahrens, gefertigt werden kann. Unter den Blechumformverfahren, können Verfahren wie beispielsweise Walzen, Schmieden, Pressen, Tiefziehen oder Biegen verstanden werden. Eine Fertigung mittels eines Trennverfahrens, beispielsweise Stanzen, ist ebenso denkbar. Ein weiterer Vorteil gegenüber Guss- und/oder Zerspanungsteilen liegt in der erheblich vereinfachten Verarbeitbarkeit, insbesondere der Handhabung des aus dem Blechumformverfahren gefertigten als scheibenförmig ausgebildeten Versteifungselementes. Zur Erreichung einer möglichst hohen Stabilität und/oder einer vereinfachten Montage ist das Versteifungselement einteilig ausgebildet.

Bei einer weiteren besonders bevorzugten Ausführungsform sind die Außenprofile und die Diagonalelemente über das zumindest eine Versteifungselement kraftübertragend miteinander verbunden. Ein während des Verschwenkvorgangs des Gestänges entstehender Kraftfluss kann somit direkt zwischen den Diagonalelementen und den Außenprofilen über das Versteifungselement übertragen und zumindest teilweise aufgenommen werden.

In einer weiteren bevorzugten Weiterbildung ist an jeder Querstrebe des zumindest einen Gestängeabschnittes zumindest ein Versteifungselement angeordnet. Durch diese Anordnung ist eine nahezu durchgehend gleichwertige Stabilität der einzelnen Gestängeabschnitte erreicht. Lokale Schwachstellen des zumindest einen Gestängeabschnittes, insbesondere gegenüber Torsionsmomenten, sind in dieser Weise nahezu minimierbar.

Erfindungsgemäß sind jeder Querstrebe zumindest zwei Knotenpunkte zugeordnet, wobei die Knotenpunkte mit dem zumindest einen Versteifungselement verbunden sind. Ein erster Knotenpunkt ist hierbei mit einem Bereich des Versteifungselementes verbunden der gleichzeitig an einer Außenfläche zumindest eines Außenprofils anliegt oder zumindest angrenzt. Ein weiterer Knotenpunkt ist, ausgehend vom ersten Knotenpunkt, in Richtung eines zweiten Außenprofilsmittig zwischen den zwei Außenprofilen mit dem Versteifungselement verbunden. Durch den zumindest einen zusätzlichen Knotenpunkt sind weitere Diagonalelemente mit dem Versteifungselement verbindbar. Somit ergibt sich eine weitere Momenten- bzw. Kraftaufteilung im Bereich der jeweiligen Querstreben auf die einzelnen Diagonalelemente. Infolge dieser Ausführungsform wird insbesondere eine weiter erhöhte Stabilität der Gestängeabschnitte erreicht.

In einer besonders bevorzugten Ausführungsform des erfindungsgemäßen Gestänges ist das Versteifungselement zumindest teilweise kreissegmentförmig ausgebildet. Hierbei ist insbesondere die Außenkontur des Versteifungselementes als Kreissegment ausgeformt. Somit ist bei einer Belastung des Gestänges ein besonders günstiger mechanischer Spannungsverlauf im Bereich der Außenkante des Versteifungselementes erzielt. Eingeleitete lokale mechanische Spannungen im Bereich des Kreissegmentes werden besonders günstig verteilt. Neben der somit erhöhten Belastbarkeit des Versteifungselementes, ist vor allem die Standzeit des gesamten Verteilergestänges gesteigert.

Bei einer weiteren vorteilhaften Ausführungsform des Gestänges ist das Versteifungselement elliptisch oder kreisförmig ausgebildet. Hierbei sind sowohl die Außenkonturen als auch die Innenkonturen aus runden Abschnitten gebildet. Somit ergibt sich eine besonders vorteilhafte Verteilung der mechanischen Spannungen innerhalb des Versteifungselementes, womit Defekten resultierend aus sogenannten Spannungsflüssen, die im Betrag groß sind, vorgebeugt ist. Spannungsspitzen, die eine besonders hohe Konzentration von Spannungsflüssen darstellen, werden infolge dieser Geometrie minimiert. Darüber hinaus sind durch die kreisförmige, insbesondere elliptische, Grundform des Versteifungselementes weitere Einsparungen von Material und damit weitere Gewichtsreduzierungen erzielbar.

In einer weiteren vorteilhaften Weiterbildung ist das Versteifungselement zumindest Abschnittsweise elliptisch oder kreisförmig ausgebildet, wobei zumindest zwei gegenüberliegende Abschnitte zumindest annährend parallel zur Längsachse der Außenprofile ausgerichtet sind. Die zumindest zwei parallel zur Längsachse der Außenprofile verlaufenden Abschnitte sind dabei an zumindest einer Außenfläche der Außenprofile, vorzugsweise einer dem unteren Träger zugewandten Seite, angeordnet. Hiermit ist die Kontakt- und/oder Auflagefläche des Versteifungselementes mit den oberen Außenprofilen und den Diagonalelementen vergrößert. Diese Weiterbildung zeichnet sich folglich durch ein Versteifungselement mit verbesserter Spannungsverteilung und gesteigerter Verbindungssicherheit aus.

Das erfindungsgemäße Gestänge ist ferner vorteilhaft dadurch weitergebildet, dass das Versteifungselement zumindest einen Ausschnitt, vorzugsweise mehrere Ausschnitte, aufweist. Als Ausschnitt ist hierbei eine, insbesondere mittels eines Schneidverfahrens generierbare, Aussparrung und/oder Ausnehmung im Versteifungselement zu verstehen. Unter den Schneidverfahren kann beispielsweise das Stanzen, Zerspanen und/oder auch das Brenn-, Plasma- oder Laserschneidverfahren verstanden werden. Darüber hinaus ist ein Ausschnitt oder sind die Ausschnitte vorzugsweise von dem Außenrand des Versteifungselementes vollständig umschlossen. Durch einen Ausschnitt ist vorzugsweise ein Bereich des Versteifungselements ausgespart, in dem bei einer Belastung des Gestänges nur eine geringe Materialspannung resultiert. Durch die aus den Aussparungen und/oder Ausnehmungen resultierende Materialeinsparung ist somit das Gewicht des Versteifungselementes weiter reduzierbar.

In einer weiteren bevorzugten Ausführungsform sind an dem Versteifungselement mehrere in und/oder quer zur Fahrtrichtung symmetrisch ausgebildete Ausschnitte angeordnet. Die Ausschnitte weisen hierbei vorzugsweise eine einheitliche Grundform auf. Durch die symmetrische Aufteilung der Ausschnitte wird neben der Gewichtseinsparung eine gleichmäßigere Verteilung der mechanischen Spannung im Versteifungselement erreicht.

In einer besonders bevorzugten Weiterbildung weist das Versteifungselement einen zumindest teilweise umlaufend umgebogenen Randbereich auf. Der Randbereich ist hierbei vorzugsweise in von den Außenprofilen abgewandter Richtung umgebogen. Eine Grundfläche des Versteifungselementes ist hierbei gebildet aus der Kontaktfläche zwischen der Querstrebe und dem Versteifungselement. Zwischen dieser Grundfläche und dem umgebogenen Randbereich kann beispielsweise ein Winkel von etwa 90° oder mehr eingeschlossen sein. Alternativ ist ebenso ein spitzer Winkel von unter 90° denkbar. Der umlaufend umgebogene Randbereich dient der zusätzlichen Versteifung des scheibenförmig ausgebildeten Versteifungselementes. Somit ist eine Reduzierung der Materialstärke und damit des Gewichtes bei zumindest gleichbleibender oder höherer Steifigkeit erreichbar. Neben der erhöhten Steifigkeit ist außerdem eine verbesserte Handhabung, beispielsweise während der Montage, des Versteifungselementes erreicht.

Bei einer weiteren besonders bevorzugten Ausführungsform weist das Versteifungselement einen zumindest teilweise umlaufend umgebogenen Randbereich auf, wobei der Randbereich im Querschnitt gesehen L-, U- oder S-förmig ausgebildet ist. Der L-förmig umgebogene Randbereich weist zumindest einen Schenkel auf, welcher nahezu im rechten Winkel zum Versteifungselement steht. Der U-förmig umgebogene Randbereich weist einen Schenkel im nahezu rechten Winkel zum Versteifungselement, und einen weiteren sich daran anschließenden zumindest annährend parallelen Schenkel auf, wobei der parallele Schenkel in gleicher Richtung umgebogen ist, wie der Schenkel im rechten Winkel. Bei dem S-förmig umgebogenen Randbereich hingegen ist ein sich an den Schenkel im rechten Winkel zum Versteifungselement anschließender Schenkel in entgegengesetzer Richtung umgebogen. Diesen Querschnittsformen des Randbereichs ist gemeinsam, dass die Steifigkeit in einfacher Weise weiter gesteigert ist.

Weitere Einzelheiten der Erfindung sind der Beispielsbeschreibung und den Zeichnungen zu entnehmen. Die Zeichnungen zeigen
- Fig.1: eine schematische Ansicht auf eine von einem Ackerschlepper gezogene landwirtschaftliche Feldspritze mit einem Verteilergestänge in perspektivischer Darstellung,
- Fig.2: eine Hälfte des in Fig. 1 gezeigten Verteilergestänges mit einem Mittelteil beim Zusammenfalten zur Transportstellung in einer Draufsicht von oben,
- Fig.3: ein einzelner Gestängeabschnitt des in Fig. 2 gezeigten Verteilergestänges in perspektivischer Darstellung,
- Fig.4: ein an einem Gestängeabschnitt verbautes Versteifungselement in perspektivischer Darstellung; und
- Fig. 5: ein Versteifungselement in einer Schnittansicht von der Seite.

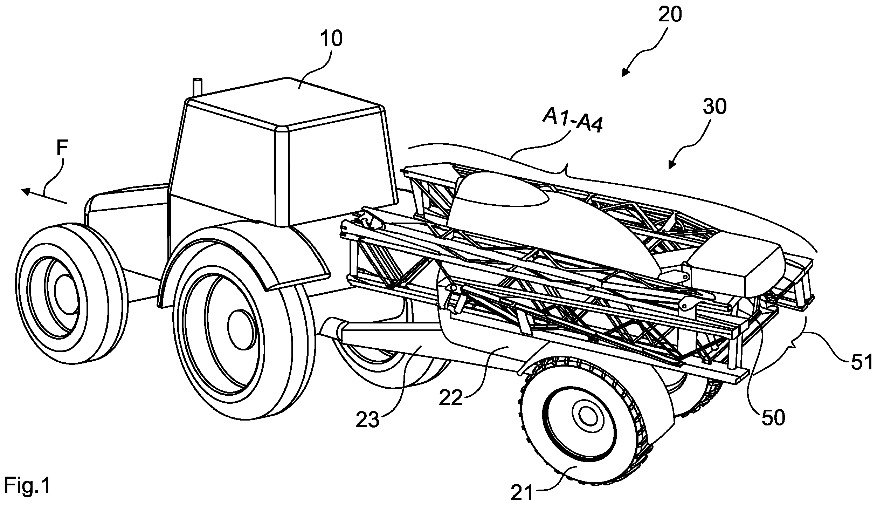

Eine von einem Ackerschlepper 10 gezogene landwirtschaftliche Feldspritze 20, zum Ausbringen von Flüssigkeiten, insbesondere Pflanzenschutzmittel, auf einer Arbeitsbreite von bis zu 40 m oder mehr ist in einer Transportstellung in Fig. 1 gezeigt. Die Feldspritze 20 wird über eine Deichsel 23 mit dem Ackerschlepper 10 verbunden. Des Weiteren umfasst die Feldspritze 20 zumindest zwei Laufräder 21 über die die Feldspritze 20 über einen landwirtschaftlichen Boden und/oder eine öffentliche Straße abgerollt wird. Die landwirtschaftliche Feldspritze 20 umfasst außerdem einen Flüssigkeitstank 22 zur Aufnahme von Flüssigkeiten, insbesondere Pflanzenschutzmittel und ein an diesem beidseitig angeordnetes Gestänge 30.

Das Gestänge 30 ist über eine Halterung 50, an dem in Fahrtrichtung F gesehen hinteren Ende, am Flüssigkeitstank 22 befestigt. Von einem der Halterung 50 zugeordnetem Mittelteil 51 des Gestänges 30, sind die einzelnen Gestängeabschnitte A1-A4 in Transportstellung in eine der Fahrrichtung F annährend parallele Ausrichtung, jeweils auf einer linken und rechten Seite an den Flüssigkeitstank 22 zusammengefaltet. Der Verlauf der zusammengeklappten Gestängeabschnitte A1-A4 ist dabei zick-zack-förmigen ausgebildet.

Innerhalb der in Fig. 1 gezeigten Transportstellung, darf eine maximale Breite der Feldspritze 20 von etwa 3 m quer zur Fahrtrichtung F nicht überschritten werden.

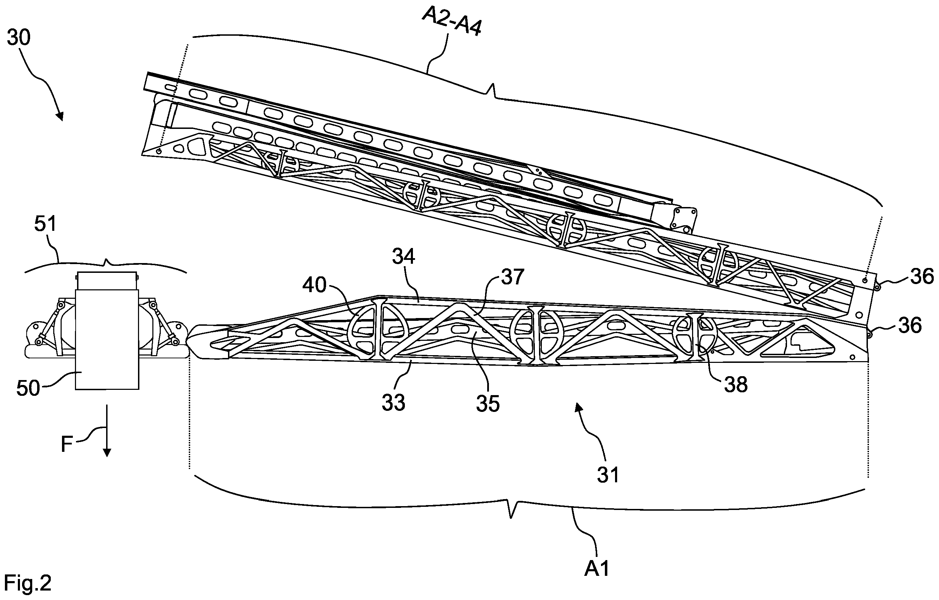

In Fig. 2 ist eine Hälfte des Verteilergestänges 30 ausgehend vom Mittelteil 51 beim Zusammenfalten von einer Arbeitsstellung in die Transportstellung gezeigt. Das in der Draufsicht dargestellte Verteilergestänge 30 ist aus mehreren als Gitterträger 31 ausgeführten Gestängeabschnitten A1-A4 zusammengesetzt, wobei die Gestängeabschnitte A1-A4 sowohl in der Arbeitsstellung als auch in der Transportstellung hochkant ausgerichtet sind. Die jeweiligen Gestängeabschnitte A1-A4 sind über an den Enden angeordnete, nahezu senkrecht zum Boden ausgerichtete, Gelenke 36 schwenkbar miteinander verbunden. Der als Obergurt bezeichnete obere Teil eines Gestängeabschnittes A1-A4, wird aus einem ersten Außenprofil 33 und einem nahezu in gleicher Richtung weisendem zweiten Außenprofil 34 gebildet. Die Außenprofile 33, 34 werden über mehrere in Längsrichtung der Außenprofile 33, 34 beabstandete, quer zu diesen ausgerichtete, Querstreben 38 miteinander verbunden. Zur zusätzlichen Versteifung des Verteilergestänges 30 sind zwischen den Außenprofilen 33, 34 in einer Fachwerkbauweise ausgebildete Diagonalstreben 37 angeordnet.

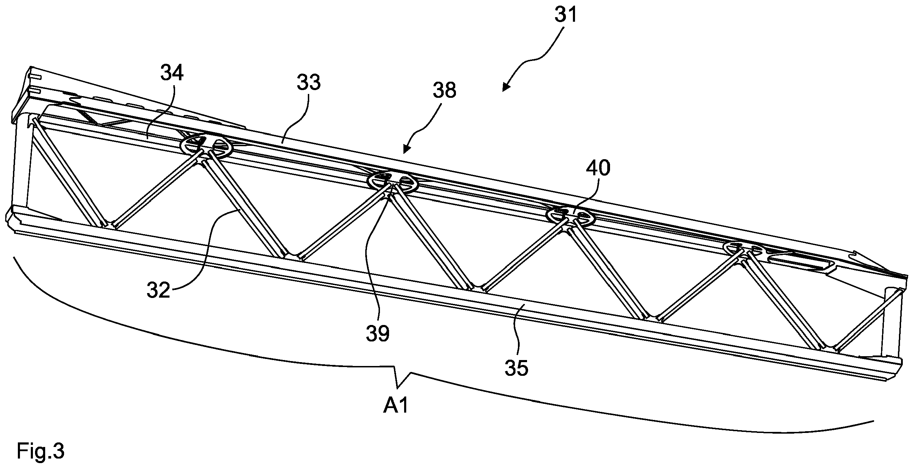

Der in Fig. 3 gezeigte, als Gitterträger 31 ausgebildete, Gestängeabschnitt A1 umfasst des Weiteren einen zu den Außenprofilen 33, 34 parallel verlaufenden, als Untergurt bezeichneten, unteren Träger 35. Durch den L-profilförmigen Aufbau des Gestänges 30, weißt der Obergurt eine größere Breite als der untere Träger 35 auf, wobei die Längsachsen von dem Obergurt und dem unteren Träger 35 im Querschnitt gesehen versetzt zueinander angeordnet sind. Zwischen den oberen Außenprofilen 33, 34 und dem unteren Träger 35 sind zur Versteifung des Gestängeabschnittes A1 mehrere Diagonalelemente 32 angeordnet. Im Bereich jeder Querstrebe 38 sind jeweils zumindest zwei Enden der Diagonalelemente 32 in einem Knotenpunkt 39 zusammengeführt. Die Knotenpunkte 39 sind dabei über scheibenförmig ausgebildete Versteifungselemente 40 kraftübertragend mit den Querstreben 38 und den oberen Außenprofilen 33, 34 verbunden. Zur weiteren Gewichtseinsparung ist denkbar, dass die Versteifungselemente 40 in einer alternativen Ausführungsform jeweils nur an zumindest einer Querstrebe 38 eines Gestängeabschnittes A1-A4 angeordnet sind.

Während des Verschwenkvorgangs aus der Transport- in die Arbeitsstellung oder umgekehrt der einzelnen Gestängeabschnitte A1-A4 des Verteilergestänges 30 treten unter anderem hohe Torsionsmomente innerhalb der einzelnen Gestängeabschnitte A1-A4 auf. Diese wiederrum wirken sich vor allem als große mechanische Spannungen an den einzelnen Komponenten des als Gitterträger 31 ausgebildeten Gestängeabschnitte A1-A4 aus, die häufig zum Versagen der einzelnen Verbindungsstellen zwischen den Außenprofilen 33, 34, der Querstrebe 38 und den Diagonalelementen 32 führen.

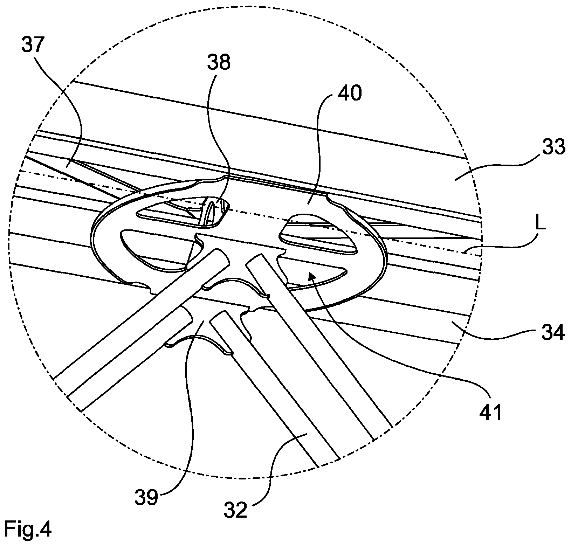

In Fig. 4 ist das einzelne Versteifungselement 40 im vergrößerten Maßstab dargestellt. Das dargestellte Versteifungselement 40 ist dazu eingerichtet die an dem Gestängeabschnitt A1, insbesondere an den jeweiligen Verbindungsstellen, wirkenden Spannungsspitzen, die besonders hohe Spannungen darstellen, zu reduzieren. Infolge der elliptischen Form weisen die innerhalb des Versteifungselementes 40 verlaufenden Spannungsflüsse einen nahezu homogenen Verlauf auf. Alternativ zur gezeigten Ausführungsform kann das Versteifungselement 40 kreisförmig und/oder nur teilweise aus einzelnen Kreissegmenten bestehen, die vorzugsweise an den Stellen mit besonders hohen mechanischen Spannungen angeordnet sind.

Zur Vergrößerung der Auflagefläche zwischen den Außenprofilen 33, 34 und dem Versteifungselement 40, sind zwei gegenüberliegende Abschnitte annährend parallel zur Längsachse L der Außenprofile 33, 34 an dem Versteifungselement 40 angeformt. Hierbei liegt ein Abschnitt des Versteifungselementes 40 an dem ersten Außenprofil 33 an und der zweite Abschnitt an dem zweiten Außenprofil 34. Die Verbindung zwischen dem Versteifungselement 40 und den Außenprofilen 33, 34 kann hierbei beispielsweise geschweißt, gelötet oder geklebt sein.

Um das Eigengewicht des Versteifungselementes 40 bei möglichst gleichbleibender Steifigkeit gering zu halten, sind an diesem mehrere Ausschnitte 41 ausgebildet. Alternativ ist eine nicht gezeigte Ausführungsform mit nur einem Ausschnitt 41 denkbar. Diese Ausschnitte 41 dienen neben der möglichst dünn ausgeführten scheibenförmigen Bauweise des Versteifungselementes 40 zur zusätzlichen Materialeinsparung. Die Aufteilung der Ausschnitte 41 kann hierbei wie in der Fig. 4 zu sehen, symmetrisch auf der Geometrie aufgeteilt sein. Diese Art der Ausgestaltung hat neben der Materialeinsparung eine gleichmäßigere Verteilung der Spannungen innerhalb des Versteifungselementes 40 zur Folge. Alternativ zur gezeigten Ausführungsform sind jedoch auch asymmetrische Aufteilungen der Ausschnitte 41 auf dem Versteifungselement 40 denkbar.

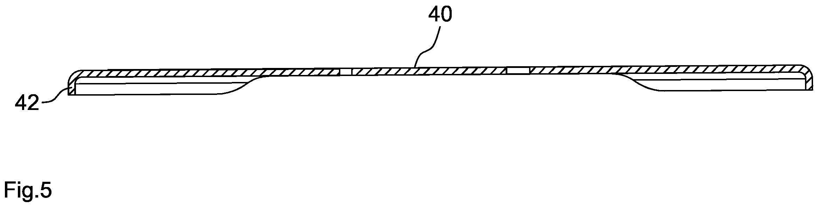

Zur weiteren Stabilisierung weist das Versteifungselement 40 einen in der Fig. 5 gezeigten umlaufend umgebogenen Randbereich 42 auf. Das Versteifungselement 40 ist infolge des umgebogenen Randbereiches 42 zumindest annährend schalenförmig ausgebildet. Somit ist ein besonders hohes Widerstandsmoment des Versteifungselementes 40 erreicht. Im verbauten Zustand ist der Randbereich 42 in einer dem unteren Träger 35 zugewandten Richtung umgebogen, wobei der Randbereich 42 L-förmig in das Versteifungselement 40 übergeht. Alternativ zur gezeigten Ausführungsform sind beispielsweise U-, S- oder anders-förmige Randbereiche 42 denkbar. Die besonders ausgeformten Randbereiche 42 weisen neben einer weiter verbesserten Stabilität bzw. Steifigkeit ein geringeres Verletzungsrisiko auf.

Darüber hinaus ist zur weiteren Steigerung der Steifigkeit des Versteifungselementes 40, die Ausbildung von beispielsweise Sicken oder Rippen, die in das Versteifungselement 40 eingeprägt bzw. gepresst sind, denkbar.

### Bezugszeichenliste

- 10: Ackerschlepper
- 20: landwirtschaftliche Feldspritze
- 21: Laufräder
- 22: Flüssigkeitstank
- 23: Deichsel
- 30: Gestänge, Verteilergestänge
- 31: Gitterträger
- 32: Diagonalelement
- 33: erstes Außenprofil
- 34: zweites Außenprofil
- 35: unterer Träger
- 36: Gelenk
- 37: Diagonalstrebe
- 38: Querstrebe
- 39: Knotenpunkt
- 40: Versteifungselement
- 41: Ausschnitt
- 42: Randbereich
- 50: Halterung
- 51: Mittelteil

- A1 -A4: Gestängeabschnitte
- F: Fahrtrichtung
- L: Längsachse der Außenprofile

## Patentansprüche

1. Verteilergestänge (30) eines landwirtschaftlichen Gerätes, insbesondere Verteilergestänge (30) einer Feldspritze (20), wobei das Verteilergestänge (30) mehrere, vorzugsweise als Gitterträger (31) ausgebildete, Gestängeabschnitte (A1-A4) umfasst, die durch zumindest ein Gelenk (36) schwenkbar miteinander gekoppelt sind, wobei die Gestängeabschnitte (A1-A4) zwischen einer sich in etwa quer zur Arbeitsrichtung erstreckenden Arbeitsstellung und einer, vorzugsweise etwa in Arbeitsrichtung weisenden, zusammengefalteten Transportstellung verbringbar sind, wobei zumindest ein Gestängeabschnitt (A1-A4) zumindest zwei, vorzugsweise durchgehende, obere Außenprofile (33, 34), zumindest einen unteren Träger (35) und mehrere Diagonalelemente (32) umfasst, wobei die mehreren Diagonalelemente (32) zwischen dem unteren Träger (35) und den oberen Außenprofilen (33, 34) angeordnet sind, wobei zwischen den zumindest zwei Außenprofilen (33, 34) zumindest eine die Außenprofile (33,34) verbindende Querstrebe (38) angeordnet ist, wobei jeder Querstrebe (38) zumindest ein Knotenpunkt (39) zugeordnet ist, an dem die Enden wenigstens zweier Diagonalelemente (32) zusammengeführt sind, wobei die Gestängeabschnitte (A1 -A4) jeweils zumindest ein, auf einer dem unteren Träger (35) zugewandten Seite der Außenprofile (33, 34) und an der Querstrebe (38) angrenzend angeordnetes, vorzugsweise als scheibenförmig ausgebildetes, einteiliges Versteifungselement (40) umfassen, **dadurch gekennzeichnet, dass** jeder Querstrebe (38) zumindest zwei Knotenpunkte (39) zugeordnet sind die mit dem zumindest einen Versteifungselement (40) verbunden sind, und wobei ein erster Knotenpunkt (39) mit einem Bereich des Versteifungselementes (40) verbunden ist der an einer Außenfläche zumindest eines Außenprofils (33, 34) anliegt oder zumindest angrenzt und ein weiterer Knotenpunkt (39) ausgehend vom ersten Knotenpunkt (39) in Richtung eines zweiten Außenprofils (33, 34) mittig zwischen den zwei Außenprofilen (33, 34) mit dem Versteifungselement (40) verbunden ist.

2. Verteilergestänge (30) nach Anspruch 1, **dadurch gekennzeichnet, dass** die Außenprofile (33, 34) und die Diagonalelemente (32) über das zumindest eine Versteifungselement (40) kraftübertragend miteinander verbunden sind.

3. Verteilergestänge (30) nach zumindest einem der vorgenannten Ansprüche, **dadurch gekennzeichnet, dass** an jeder Querstrebe (38) des zumindest einen Gestängeabschnittes (A1-A4) zumindest ein Versteifungselement (40) angeordnet ist.

4. Verteilergestänge (30) nach zumindest einem der vorgenannten Ansprüche, **dadurch gekennzeichnet, dass** das Versteifungselement (40) zumindest teilweise kreissegmentförmig ausgebildet ist.

5. Verteilergestänge (30) nach zumindest einem der vorgenannten Ansprüche, **dadurch gekennzeichnet, dass** das Versteifungselement (40) elliptisch oder kreisförmig ausgebildet ist.

6. Verteilergestänge (30) nach zumindest einem der vorgenannten Ansprüche, **dadurch gekennzeichnet, dass** das Versteifungselement (40) zumindest Abschnittsweise elliptisch oder kreisförmig ausgebildet ist, wobei zumindest zwei gegenüberliegende Abschnitte zumindest annährend parallel zur Längsachse (L) der Außenprofile (33, 34) ausgerichtet sind.

7. Verteilergestänge (30) nach zumindest einem der vorgenannten Ansprüche, **dadurch gekennzeichnet, dass** das Versteifungselement (40) zumindest einen Ausschnitt (41), vorzugsweise mehrere Ausschnitte (41), aufweist.

8. Verteilergestänge (30) nach zumindest einem der vorgenannten Ansprüche, **dadurch gekennzeichnet, dass** an dem Versteifungselement (40) mehrere in und/oder quer zur Fahrtrichtung (F) symmetrisch ausgebildete Ausschnitte (41) angeordnet sind.

9. Verteilergestänge (30) nach zumindest einem der vorgenannten Ansprüche, **dadurch gekennzeichnet, dass** das Versteifungselement (40) einen zumindest teilweise umlaufend umgebogenen Randbereich (42) aufweist.

10. Verteilergestänge (30) nach zumindest einem der vorgenannten Ansprüche, **dadurch gekennzeichnet, dass** das Versteifungselement (40) einen zumindest teilweise umlaufend umgebogenen Randbereich (42) aufweist, und dass der Randbereich (42) im Querschnitt gesehen L-, U- oder S-förmig ausgebildet ist.

## Claims

1. Distributor boom (30) of an agricultural device, in particular a distributor boom (30) of a field sprayer (20), wherein the distributor boom (30) comprises a plurality of boom portions (A1-A4), preferably designed as a lattice beam (31), which are pivotably coupled to one another by at least one joint (36), wherein the boom portions (A1-A4) can be moved between a working position extending approximately transversely to the working direction, and a folded transport position preferably extending approximately in the working direction, wherein at least one boom portion (A1-A4) comprises at least two, preferably continuous, upper outer profiles (33, 34), at least one lower beam (35), and a plurality of diagonal elements (32), wherein the plurality of diagonal elements (32) are arranged between the lower support (35) and the upper outer profiles (33, 34), wherein at least one transverse strut (38) connecting the outer profiles (33, 34) is arranged between the at least two outer profiles (33, 34), wherein at least one node point (39), at which the ends of at least two diagonal elements (32) are joined, is associated with each transverse strut (38), wherein the boom portions (A1-A4) each comprise at least one one-piece stiffening element (40) which is arranged on a side of the outer profile (33, 34) that faces the lower beam (35) and so as to be adjacent to the transverse strut (38), and which is preferably disc-shaped, **characterized in that** at least two node points (39), which are connected to the at least one stiffening element (40), are associated with each transverse strut (38), and wherein a first node point (39) is connected to a region of the stiffening element (40) that abuts or is at least adjacent to an outer surface of at least one outer profile (33, 34), and a further node point (39), starting from the first node point (39) in the direction of a second outer profile (33, 34), is connected to the stiffening element (40) centrally between the two outer profiles (33, 34).

2. Distributor boom (30) according to claim 1, **characterized in that** the outer profiles (33, 34) and the diagonal elements (32) are connected to one another in a force-transmitting manner via the at least one stiffening element (40).

3. Distributor boom (30) according to at least one of the preceding claims, **characterized in that** at least one stiffening element (40) is arranged on each transverse strut (38) of the at least one boom portion (A1-A4).

4. Distributor boom (30) according to at least one of the preceding claims, **characterized in that** the stiffening element (40) is at least partially in the shape of a circular segment.

5. Distributor boom (30) according to at least one of the preceding claims, **characterized in that** the stiffening element (40) is elliptical or circular.

6. Distributor boom (30) according to at least one of the preceding claims, **characterized in that** the stiffening element (40) is designed to be elliptical or circular at least in portions, wherein at least two opposite portions are oriented at least approximately in parallel with the longitudinal axis (L) of the outer profiles (33, 34).

7. Distributor boom (30) according to at least one of the preceding claims, **characterized in that** the stiffening element (40) has at least one cutout (41), preferably a plurality of cutouts (41).

8. Distributor boom (30) according to at least one of the preceding claims, **characterized in that** a plurality of cutouts (41) formed symmetrically in and/or transversely to the direction of travel (F) are arranged on the stiffening element (40).

9. Distributor boom (30) according to at least one of the preceding claims, **characterized in that** the stiffening element (40) has an at least partially circumferentially bent edge region (42).

10. Distributor boom (30) according to at least one of the preceding claims, **characterized in that** the stiffening element (40) has an at least partially circumferentially bent edge region (42), **and in that** the edge region (42) is L-shaped, U-shaped or S-shaped when viewed in cross section.

## Revendications

1. Rampe de distribution (30) d'un appareil agricole, en particulier rampe de distribution (30) d'un pulvérisateur agricole (20), la rampe de distribution (30) comprenant plusieurs sections de rampe (A1-A4), de préférence réalisées comme des poutres en treillis (31), lesquelles sont accouplées les unes aux autres de manière à pouvoir pivoter par au moins une articulation (36), les sections de rampe (A1-A4) pouvant être déplacées entre une position de travail s'étendant approximativement transversalement au sens de travail et une position de transport repliée, pointant de préférence approximativement dans le sens de travail, au moins une section de rampe (A1-A4) comprenant au moins deux profilés extérieurs (33, 34) supérieurs, de préférence continus, au moins un support inférieur (35) et plusieurs éléments diagonaux (32), les plusieurs éléments diagonaux (32) étant disposés entre le support inférieur (35) et les profilés extérieurs (33, 34) supérieurs, au moins une traverse (38) reliant les profilés extérieurs (33, 34) étant disposée entre les au moins deux profilés extérieurs (33, 34), au moins un point de jonction (39) étant associé à chaque traverse (38), au niveau duquel les extrémités d'au moins deux éléments diagonaux (32) sont réunies, les sections de rampe (A1-A4) comprenant respectivement au moins un élément de raidissement (40) d'une seule pièce, de préférence réalisé en forme de disque, disposé sur un côté des profilés extérieurs (33, 34) faisant face au support inférieur (35) et de manière adjacente à la traverse (38), **caractérisée en ce qu'**au moins deux points de jonction (39) sont associés à chaque traverse (38), lesquels sont reliés à l'au moins un élément de raidissement (40), et un premier point de jonction (39) étant relié à une zone de l'élément de raidissement (40) qui est en appui sur une surface extérieure d'au moins un profilé extérieur (33, 34) ou au moins adjacente à celle-ci, et un autre point de jonction (39) étant relié à l'élément de raidissement (40) à partir du premier point de jonction (39) en direction d'un second profilé extérieur (33, 34), au milieu entre les deux profilés extérieurs (33, 34).

2. Rampe de distribution (30) selon la revendication 1,
**caractérisée en ce que** les profilés extérieurs (33, 34) et les éléments diagonaux (32) sont reliés entre eux de manière à transmettre une force par l'intermédiaire de l'au moins un élément de raidissement (40).

3. Rampe de distribution (30) selon au moins l'une quelconque des revendications précédentes, **caractérisée en ce qu'**au moins un élément de raidissement (40) est disposé sur chaque traverse (38) de l'au moins une section de rampe (A1-A4).

4. Rampe de distribution (30) selon au moins l'une quelconque des revendications précédentes, **caractérisée en ce que** l'élément de raidissement (40) est réalisé au moins partiellement en forme de segment de cercle.

5. Rampe de distribution (30) selon au moins l'une quelconque des revendications précédentes, **caractérisée en ce que** l'élément de raidissement (40) est réalisé sous forme elliptique ou circulaire.

6. Rampe de distribution (30) selon au moins l'une quelconque des revendications précédentes, **caractérisée en ce que** l'élément de raidissement (40) est réalisé, au moins dans certaines sections, sous forme elliptique ou circulaire, au moins deux sections opposées l'une à l'autre étant orientées au moins approximativement parallèlement à l'axe longitudinal (L) des profilés extérieurs (33, 34).

7. Rampe de distribution (30) selon au moins l'une quelconque des revendications précédentes, **caractérisée en ce que** l'élément de raidissement (40) présente au moins une découpe (41), de préférence plusieurs découpes (41).

8. Rampe de distribution (30) selon au moins l'une quelconque des revendications précédentes, **caractérisée en ce que** plusieurs découpes (41) réalisées de manière symétrique dans le sens de conduite (F) et/ou transversalement à celui-ci sont disposées sur l'élément de raidissement (40).

9. Rampe de distribution (30) selon au moins l'une quelconque des revendications précédentes, **caractérisée en ce que** l'élément de raidissement (40) présente une région de bord (42) courbée au moins partiellement de manière circonférentielle.

10. Rampe de distribution (30) selon au moins l'une quelconque des revendications précédentes, **caractérisée en ce que** l'élément de raidissement (40) présente une région de bord (42) courbée au moins partiellement de manière circonférentielle **et en ce que** la région de bord (42) est réalisée, vue en section transversale, en forme de L, de U ou de S.
